# EUROPEAN PATENT APPLICATION

(11) **EP 4 530 270 A2**
(43) Date of publication of application: **02.04.2025**
(21) Application number: 24218030.5
(22) Date of filing: 31.05.2017
(51) Int. Cl.: C03C 17/06

(54) **SACRIFICIAL LAYER FOR ELECTROCHROMIC DEVICE FABRICATION**

(30) Priority: 01.06.2016 US 201662344147 P
(62) Divisional of application: 17807412.6
(71) Applicant: View, Inc., Milpitas, CA 95035 (US)
(72) Inventor: PARKER, Ronald M., Olive Branch, Mississippi 38654 (US); PRADHAN, Anshu A., Collierville, Tennessee 38017 (US); DIXIT, Abhishek Anant, Memphis, Tennessee 38125 (US); DAUSON, Douglas, Olive Branch, Mississippi 38654 (US)
(74) Representative: Haseltine Lake Kempner LLP

(57) **Abstract**

Methods for protecting transparent electronically conductive layers on glass substrates are described herein. Methods include depositing a sacrificial coating during deposition of the transparent electronically conductive layer, before packing the glass substrate for storage or shipping, after unpacking glass substrates from a stack of glass substrates, and/or after a washing operation prior to fabricating an electrochromic stack on the transparent electronically conductive layer. Methods also include removing the sacrificial coating during a washing operation, during tempering, or prior to depositing an electrochromic stack by, e.g., heating the sacrificial coating or exposing the sacrificial coating to an inert plasma.

## Description

### CROSS-REFERENCE TO RELATED APPLICATION

This application claims benefit of U.S. Provisional Patent Application No. 62/344,147, filed June 1, 2016, and titled "SACRIFICIAL LAYER FOR ELECTROCHROMIC DEVICE FABRICATION," which is incorporated by reference herein in its entirety and for all purposes.

### BACKGROUND

Manufacturing processes of preparing a glass substrate in preparation for fabricating an electrochromic device often involve various handling, washing, and processing operations. These process operations that can cause scratches, smudging, fingerprints, particles, and other contamination on the surface of the substrate. Such contamination or damage, which thereby reduce the viability and efficiency of an electrochromic device fabricated on the glass substrate, and thus reduce yield.

### BRIEF DESCRIPTION OF THE DRAWINGS

Figure 1 is a process flow diagram depicting a method of fabricating an electrochromic window.
Figure 2 is a schematic illustration of operations for fabricating an electrochromic window.
Figures 3A-3C are process flow diagrams depicting example methods of depositing and removing a sacrificial coating during fabrication of an electrochromic window in accordance with certain disclosed embodiments.
Figure 4A is a schematic representation of an example of an electrochromic device.
Figure 4B is a schematic representation of an insulated glass unit.
Figure 5A-5D, 6A, and 6B are graphs depicting experimental results.

### DETAILED DESCRIPTION

In the following description, numerous specific details are set forth to provide a thorough understanding of the presented embodiments. The disclosed embodiments may be practiced without some or all of these specific details. In other instances, well-known process operations have not been described in detail to not unnecessarily obscure the disclosed embodiments. While the disclosed embodiments will be described in conjunction with the specific embodiments, it will be understood that it is not intended to limit the disclosed embodiments.

### INTRODUCTION

Embodiments herein are described in terms of fabricating electrochromic devices; however, the scope of the disclosure is not so limited. One of ordinary skill in the art would appreciate that the methods and devices described apply to protecting other thin-film devices, such as devices where one or more layers are sandwiched between two thin-film conductor layers. Certain embodiments are directed to optical devices, that is, thin-film devices having at least one transparent conductor layer. In its simplest form, an optical device includes a substrate and one or more material layers sandwiched between two conductor layers, at least one of which is transparent. In one embodiment, an optical device includes a transparent substrate and two transparent conductor layers. In another embodiment, an optical device includes a transparent substrate, a lower transparent conductor layer disposed thereon, and an upper conductor layer that is not transparent (e.g., it is reflective). In another embodiment, the substrate is not transparent, and one or both of the conductor layers is transparent. Some examples of optical devices include electrochromic devices, electroluminescent devices, photovoltaic devices, suspended particle devices (SPD's), and the like. For context, a description of electrochromic devices is presented below. For convenience, all solid-state and inorganic electrochromic devices are described; however, embodiments are not limited in this way.

Electrochromic devices are used in, for example, electrochromic windows. An electrochromic window is a window that includes an electrochromic lite which is a transparent panel that changes in an optical property such as color or degree of tinting when a driving potential is applied between the conductor layers of the lite. For example, an electrochromic lite may tint to filter out 50% of incident light or filter out about 70% of light that would be otherwise transmitted through the window. Electrochromic windows may filter out some or all wavelengths of energy in the solar spectrum. Electrochromic windows may be deployed in buildings such as commercial skyscrapers, or residential homes, to help save energy used in central heating or air conditioning systems. For example, an electrochromic lite may be tinted to reduce the amount of light and heat entering a room during a warm day, to reduce the energy used to power an air-conditioner in the room. For example, a glass substrate may be architectural glass upon which electrochromic devices are fabricated. Architectural glass is glass that is used as a building material. Architectural glass is typically used in commercial buildings, but may also be used in residential buildings, and typically, though not necessarily, separates an indoor environment from an outdoor environment. In certain embodiments, architectural glass is at least about 20 inches by 20 inches, or at least about 14 inches by 14 inches, and can be much larger, e.g., as large as about 72 inches by 120 inches, or as large as about 72 by 144 inches, or as large as about 84 inches by 144 inches.

A typical electrochromic (EC) device as described herein includes a substrate, a bottom or first transparent conductor layer (or transparent electronically conductive layer), an electrochromic electrode layer, an optional ion-conducting electronically resistive layer, a counter electrode layer, and a top or second transparent conductor layer. The electrochromic, ion conductor, and counter electrode layers deposited over the first transparent conductor layer may be referred to herein as an "EC stack."

The substrate may be a glass substrate, or a clear rigid plastic substrate. The substrate can be formed of any material having suitable optical, electrical, thermal, and mechanical properties. For example, other suitable substrates can include other glass materials as well as plastic, semi-plastic and thermoplastic materials (for example, poly(methyl methacrylate), polystyrene, polycarbonate, allyl diglycol carbonate, SAN (styrene acrylonitrile copolymer), poly(4-methyl-1-pentene), polyester, polyamide), or mirror materials. A glass substrate including the first transparent conductor layer may be referred to collectively as a glass sheet or glass roll (a long sheet in a rolled format).

Common examples of a transparent conductor layer include a transparent conductive oxide (TCO) layer, or a very thin metal layer, or a combination of metal layers and TCO layers. Further references to a TCO layer as described herein are intended to also cover other forms of transparent conductor layers unless otherwise described.

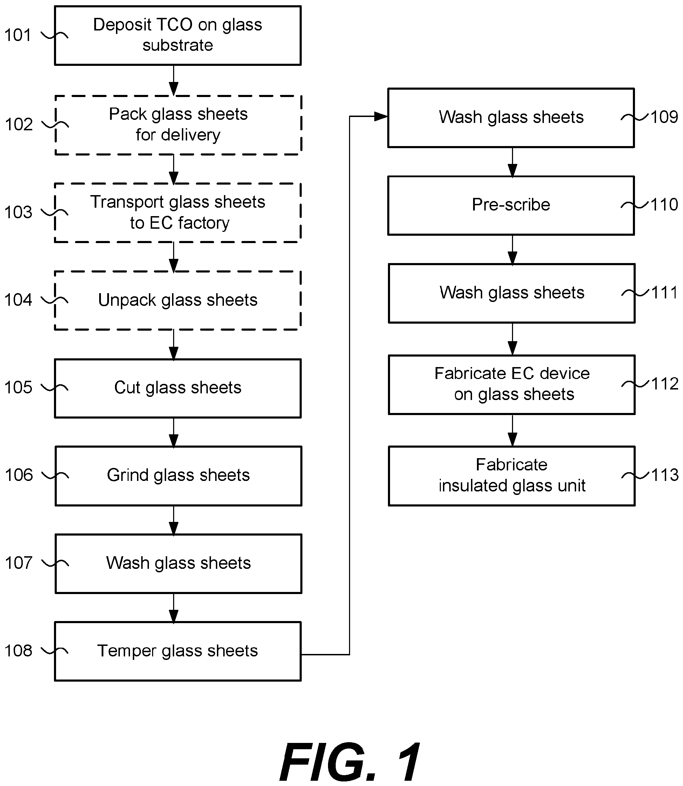

After these layers are fabricated, the EC device may undergo subsequent processing to fabricate an insulated glass unit (IGU). In the process flow of fabricating an EC device, many handling and preparation operations are performed to prepare the glass substrate, which may include a transparent conductive material fabricated thereon, prior to coating the EC stack onto the substrate. In various embodiments, the first transparent conductor layer is first deposited on a glass substrate. This glass sheet including both the glass substrate and the first transparent conductor layer is then transported to a factory for fabricating the rest of the EC device, unless it was deposited at the factory where the electrochromic device is also fabricated. Prior to fabricating the rest of the EC device, the glass substrate with the first transparent conductor layer may undergo a variety of preparation processes, such as cutting, grinding, washing, tempering, and pre-scribing operations, which are further described below with respect to Figure 1. Figure 1 is described in detail below.

Although these handling operations are performed in such a way to preserve the pristine quality of the glass substrate and transparent conductive material on the substrate, the substrate is often exposed to various environments that may result in scratches, smudging, fingerprints, particles, and contamination or other damage on the transparent conductor layer. Multiple washing operations are commonly incorporated into the fabrication process, but even with these cleaning processes, scratches, smudging, fingerprints, particles, and contaminants may result on the surface of a transparent conductor layer. It is important to remove contaminants from the substrate because they can cause defects in the device fabricated on the substrate. One defect is a particle or other contaminant that creates a conductive pathway across an ion conducting (electronically resistive) layer and thus shorts the device locally causing visually discernable anomalies in the electrochromic window. These anomalies are often manifest as halos, sometimes having diameters of one centimeter or more, clearly visible through tinted electrochromic lites. These halos can be repaired, but some repair processes leave a "pinhole" where the particle or shorting defect is circumscribed by a laser. Although not as aesthetically unpleasing as a halo because they are much smaller (on the order of 50-200 microns in diameter), pinholes are also unwanted.

Currently, there is no reliable protection against scratches, smudging, fingerprints, particles, and contamination or other surface damage on the fabrication line. Although washing operations are used, the substrate is still exposed to environments in which the transparent conductive material may be scratched, smudged, contaminated, or subjected to fingerprints and particles. In particular, there are many handling aspects of the transfer operations that may cause issues. Between the operation in which the glass substrate is removed from the float line of the supplier and the operation of fabricating an EC device on the glass substrate, there are several opportunities for the glass substrate to get scratched, smudged, contaminated, or subjected to fingerprints and particles. Some scratches may not be very wide, e.g. some scratches may be less than about 500µm wide and can range in length from couple of mm to inches. As these are pre-deposition scratches that remove the first transparent conductor layer, the area of the scratch does not color, creating and objectionable contrast difference. This objectionable contrast difference is strongly visible resulting in part failure, even though the rest of area of the part meets all the specs e.g. a 6' x 10' part can fail due to a scratch of few mm. In the event that the TCO-coated substrate is fabricated in the same factory as the EC coating, there still may be intermediate handling steps as described e.g. in relation to Figure 1.

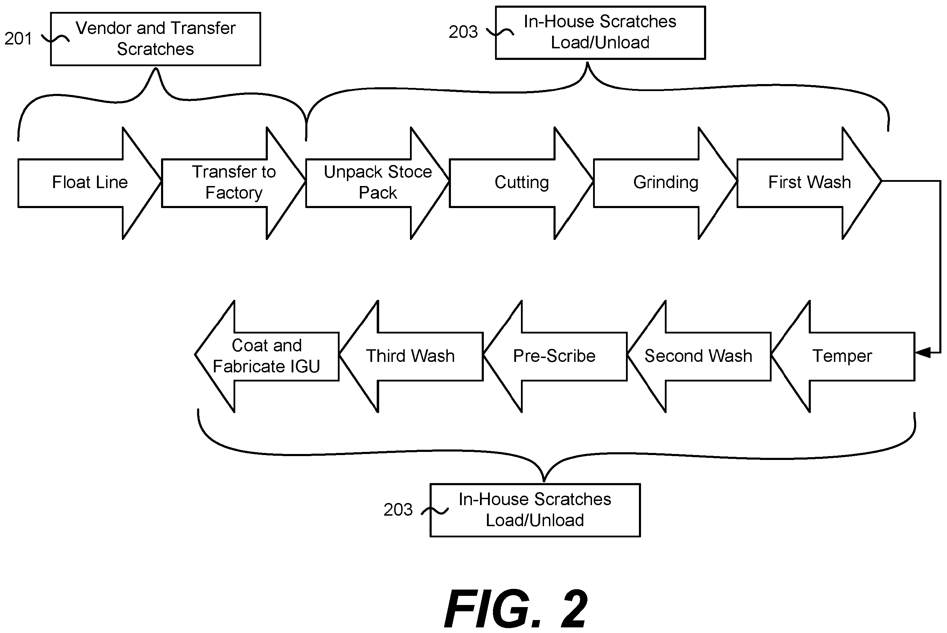

Figure 2 shows an example of the operations as described above in which a substrate may be susceptible to scratches, smudging, fingerprints, particles, and contamination. Figure 2 is described in detail below.

### ELECTROCHROMIC WINDOW MANUFACTURING PROCESS

Figure 1 provides a process flow diagram depicting various operations that may be performed during a manufacturing process of an EC device on a glass substrate, with an emphasis on the operations performed prior to fabricating the EC stack that includes the electrochromic layer and the counter electrode layer.

In operation 101, a transparent conductive material is fabricated on a glass substrate. In some embodiments, the transparent conductive material is applied onto molten glass. For example, fluorinated tin oxide, a common TCO, can be applied to molten glass while it is progressing through a tin float line manufacturing process. This is often called a "pyrolytic" coating because precursors are sprayed onto the molten glass and are converted to the TCO film at high temperatures. The glass substrate may be made of a glass material such as an architectural glass or other shatter-resistant glass material. An example of a glass substrate may be a silicon oxide (SOₓ)-based glass material. As a more specific example, a substrate can be a soda-lime glass substrate or float glass substrate. Such glass substrates can be composed of, for example, approximately 75% silica (SiO₂) as well as Na₂O, CaO, and several minor additives. However, as described above, the substrate can be formed of any material having suitable optical, electrical, thermal, and mechanical properties. In some implementations, each of the first and the second panes can be strengthened, for example, by tempering, heating, or chemically strengthening. In some embodiments, a diffusion barrier is deposited between the glass substrate and the first transparent conductive material.

Transparent conductive materials, such as metal layers, metal oxides, alloy oxides, and doped versions thereof, are commonly referred to as "TCO" layers because they are sometimes made from transparent conducting oxides or transparent metal oxides. The term "TCO" is conventionally used to refer to a wide range of transparent conductive materials that can be formed as conductive layers used to deliver potential across the face of an electrochromic device to drive or hold an optical transition. While such materials are referred to as TCOs in this document, the term encompasses non-oxides as well as oxides that are transparent and electronically conductive such as certain very thin metals and certain non-metallic materials. Transparent conductive material typically has an electronic conductivity significantly greater than that of the electrochromic material or the counter electrode material. For example, the transparent conductive material may have a resistivity of at least about 100 µOhm-cm to about 600 µOhm-cm. Further, the transparent conductive material may have a sheet resistance of at most about 5 Ohms/square to about 20 Ohms/square, or at most about 10 Ohms/square to about 20 Ohms/square. Certain TCOs may have a sheet resistance of less than 10 Ohms/square, less than 5 Ohms/square or less than 3 Ohms/square. Example transparent layers include indium tin oxide (ITO), fluorinated tin oxide (FTO), and aluminum zinc oxide (AZO). The term "TCO" as described herein may also include multi-layer structures. For example, a TCO may include a first ITO layer, a metal layer, and a second ITO layer, with the metal layer between the two ITO layers. A transparent conductor layer may also refer to a multi-layer structure having one or more layers of transparent conductive materials. Some TCOs may also include a metallic top or bottom conducting layer.

In some embodiments, the glass substrate is also fabricated with a diffusion barrier formed over the glass. This diffusion barrier may be configured to block diffusion of alkali or other ions from migrating from the glass and into the EC device coating, which can poison the device and render it inoperable or damaged. For example, the diffusion barrier layer may be deposited over the glass prior to forming a first transparent conductor layer on the substrate. During operation 101, the glass substrate including the transparent conductor layer may be annealed, scored, and broken into deliverable glass sheets. Glass substrates may be incorporated such that one or more substrates may be used to form an insulated glass unit (IGU) as further described below. In some embodiments, the substrates produced in operation 101 are not sized for incorporation in an IGU; they are still substantially larger. Only later in the fabrication process are the substrates reduced to a size suitable for preparing an IGU.

In operation 102, the glass substrate including the transparent conductor layer is prepared for delivery to another facility. Typically, large unfinished glass substrates are manufactured in a first facility that specializes in glass fabrication and then shipped to customers who finish the glass for their purposes. The manufactured glass sheets or rolls may be handled, processed, and/or shipped in an atmospherically controlled environment, e.g. a dry environment and/or inert gas environment. In some embodiments, the substrates may be cut into a predetermined size and packaged. To prepare the substrates for delivery, interleaving sheets or interleaving powders may be used to separate the substrates from each other in a stack. Such sheets or powders may be used to prevent the substrates from sticking to one another by van der Waals forces, electrostatic forces, etc. A suitable interleaving sheet may be a highly polished paper, such as a rice paper. Example interleaving powders may also be used, such as those available from Chemetall Group of New Providence, NJ and also include those described in "How to Prevent Glass Corrosion" by Duffer, Paul F., GLASS DIGEST, November 15, 1986. A wide range of interleaving sheets may be used and range from craft paper to highly technical pH balance materials. A powder may include a type of bead such as an acrylic or polymeric ultrahigh molecular weight (UHMW) bead, and/or an acidic component that prevents staining, such as adipic acid. Further examples of interleaving materials include polymethyl methacrylate beads and coconut husk flour. During this operation, the glass sheets may also be packed into a Stoce pack by a robot. A Stoce pack includes 25 sheets of glass sheets with interleaving powder or interleaving sheets between each glass sheet. The Stoce pack may then be closed and stored such that it will be ready for shipment. Handling operations during operation 101 may subject the transparent conductor layer on the substrate to scratches, smudging, fingerprints, particles, and contamination.

In operation 103, the glass sheets are transported to a factory for fabricating electrochromic devices by loading Stoce packs of glass sheets onto a truck, train, ship, or other vehicle, and transporting them to another facility.

In operation 104, the Stoce packs of glass sheets are unloaded from the transport vehicle using, e.g., slings to move the Stoce packs from the truck and load them onto storage racks. In certain embodiments, the Stoce packs are then transferred to gantry racks by slings to prepare for the next operation. These unloading and transferring operations involve handling the glass sheets, which may cause scratches, smudging, fingerprints, particles, and contamination on the transparent conductor layer.

In operation 105, a robot may transfer a single sheet of glass from the Stoce pack to a cutting table. The glass sheet may be scored. The glass sheet is moved to a breakout section of a cutting table and broken into smaller sheets. The glass sheet is then transferred (e.g., by hand) to a grinding line. Transferring the glass sheet by hand exposes the glass sheet to possible suction cup marks, scratches, smudging, fingerprints, particles, contamination, and other deleterious effects. The transferring may also expose the glass sheet to other environments that can damage the TCO.

Cutting can produce micro-cracks and internal stresses proximate the cut. These can result in chipping or breaking of the glass, particularly near the edges. To mitigate the problems produced by cutting, cut glass may be subject to edge finishing, for example, by mechanical and/or laser methods. Thus, in operation 106, the edges of the glass are ground one or more times.

Mechanical edge finishing typically involves grinding with, for example, a grinding wheel containing clay, stone, diamond, etc. Typically, water flows over edge during mechanical edge finishing. The resulting edge surface is relatively rounded and crack-free. Laser edge finishing typically produces a flat, substantially defect free surface. For example, an initial cut through the glass, perpendicular to the surface of the glass, may make a substantially defect free cut. However the right angle edges at the perimeter of the glass are susceptible to breakage due to handling. In some embodiments, a laser is used subsequently to cut off these 90 degree edges to produce a slightly more rounded or polygonal (or beveled) edge.

In operation 107, the glass sheet is washed with water and dried. One example of a cleaning process and apparatus suitable for the fabrication methods of the invention is Lisec^{™} (a trade name for a glass washing apparatus and process available from (LISEC Maschinenbau Gmbh of Seitenstetten, Austria)). Subsequently, the glass sheet is transferred to a cart. During the transfer, the glass sheet may be exposed to environments that result in scratches, smudging, fingerprints, particles, and contamination on the surface of the transparent conductor layer.

In operation 108, the glass sheet is transferred from a cart to a bed or other substrate holder of a tempering oven. This transfer may also result in some scratches, smudging, fingerprints, particles, and contamination. The glass sheet is then heated to 600°C or more and the heat is quickly quenched to temper the glass sheet. The quench process cools the glass by blowing a large volume of air at high velocity onto the glass sheet. During this process, the glass sheet may get scratched if there are any sharp particles (e.g. metal, glass etc.) in the air. The quench air may also have contaminants which will react on the hot glass sheet causing a blemish. Subsequently, the glass sheet is transferred to another carta holding buffer. During this transfer, there is a risk of scratching, smudging, damaging, or contaminating the transparent conductor layer on the tempered glass.

In operation 109, the glass sheet is transferred to a washer (e.g., to a load bed of a washer). The glass sheet is scrubbed in e.g. an acidic, neutral, or basic pH solution to clean the glass sheet. During this scrubbing operation, the transparent conductor layer of the glass sheet may be subject to scratches and damage from mechanical and/or chemical contact. In some embodiments, one or more wash operations during operation 109 may include a solution including chelating agents. Examples of suitable chelating agents include organic diamines; organic acids; dithio compounds; aminopolycarboxylic acids; and ammonium salts, metal salts, and organic alkali salts of such acids. Example aminopolycarboxylic acids include ethylenediaminetetraacetic acid (EDTA), hydroxyethylethylenediaminetriacetic acid (HEDTA), dihydroxyethylethylenediaminetetraacetic acid (DHEDTA), 1,3-propanediaminetetraacetic acid (DTPA), triethylenetetraminehexaacetic acid (TTNA), nitrilotriacetic acid (NTA), and hydroxyethyliminodiacetic acid (HIMDA). One example diamine is ethylenediamine. Further examples of organic acids include citric acid, succinic acid, and fumaric acid. Dithio compounds include dimercaptosuccinic acid and 1,2-ethanedithiol. In some embodiments, chelating agents may be used in combination with an oxidizing agent. Chelating agents are suitable, e.g., in an aqueous solution that is basic, acidic, or with a neutral pH, and may be optionally used with an oxidizing or reducing agent or surfactant or combinations thereof.

During the pre-scribe of operation 110, the transparent conductor layer may be removed from the edges (edge deletion) to prepare the glass sheet for fabrication of the EC stack. Edge deletion is further described in PCT Application No. 2013090209, filed on December 10, 2012, titled "THIN-FILM DEVICES AND FABRICATION," which is herein incorporated by reference in its entirety. Pre-scribing may be optional in some embodiments. Pre-scribing operations may include processing the glass sheet in an apparatus such as a laser scribe tool, flash lamps, infrared heaters, quartz lamps, induction coils, microwave generators, UV lamps, and the like. Examples of laser scribing can be found in U.S. Patent Application No. 12/645,111, titled "FABRICATION OF LOW DEFECTIVITY ELECTROCHROMIC DEVICES," filed on December 22, 2009, U.S. Patent Application No. 13/456,056, titled "ELECTROCHROMIC WINDOW FABRICATION METHODS," filed on April 25, 2012, and PCT Patent application No. PCT/US2012/068817, titled "THIN-FILM DEVICES AND FABRICATION," filed on December 10, 2012, which are hereby incorporated by reference in their entireties. In some embodiments, this operation involves applying scribe lines to the bottom transparent conductor layer to electrically isolate the bottom transparent conductor layer and prevent potential negative effects of shorting from an upper bus bar that is later applied during coating.

In operation 111, the glass sheet is washed again, e.g. using a cleaning solution as described above, and subsequently dried. This washing operation may expose the transparent conductor layer of the glass sheet to scratches and damage from mechanical contact. In some embodiments, washing operations may include washing, drying, and repeating washing and drying operations as necessary.

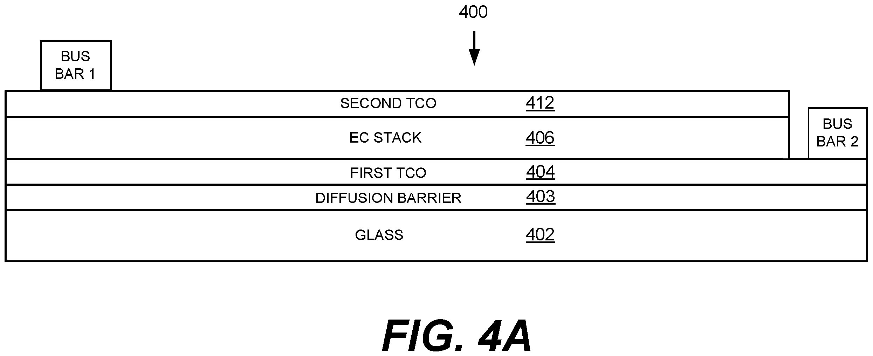

In operation 112, the glass sheet is loaded onto a carrier by, e.g., hand. This loading operation may subject the glass sheet to scratches, smudging, fingerprints, contamination, particles, and other damage. Subsequently, an electrochromic coating is applied to fabricate the EC stack on the glass sheet. Figure 4A shows an example of an electrochromic device 400 including the deposited electrochromic stack. Electrochromic device 400 includes a glass substrate 402, a diffusion barrier 403, a conductive layer (CL) layer 404, an EC stack 406, and another CL 412. The bottom transparent conductor layer 404 is the first of two conductive layers used to form the electrodes of the electrochromic device 400 fabricated on the glass substrate 402. In some examples, the glass substrate 402 may be prefabricated with the diffusion barrier 403 formed over underlying glass 402. Thus, in some embodiments, the diffusion barrier 403 is deposited prior to depositing the bottom transparent conductor layer 404, EC stack 406 (e.g., stack having electrochromic, ion conductor, and counter electrode layers), and top transparent conductor layer 412. In some embodiments, the glass substrate 402 may be prefabricated with both the diffusion barrier 403 and the bottom transparent conductor layer 404 formed over underlying glass 402. A non-penetrating bus bar (bus bar 4 or "top bus bar" as used herein) is applied to the top transparent conductor layer 412. A non-penetrating bus bar (bus bar 2 or "bottom bus bar" as used herein) is applied on the bottom transparent conductor layer 404 to an area where an EC stack 406 and a top transparent conductor layer 412 was not deposited or was removed (for example, from a mask protecting the bottom transparent conductor layer 404 from device deposition or by using a mechanical abrasion process or by using a laser ablation process). A bus bar is generally an electrical connection for providing current and voltage to conductive layer(s), often to drive or maintain an optical state. Bus bars may be penetrating or non-penetrating. The EC stack 406 and the second transparent conductor layer 412 may be coated onto the glass sheet (which includes the glass substrate 402, optional diffusion barrier 403, and first transparent conductor layer 404) in a coating apparatus. The bus bars may also be applied during operation 112.

Returning to Figure 1, in operation 113, the glass sheet is integrated into an insulated glass unit (IGU). An IGU includes multiple glass panes assembled into a single unit, generally with the intention of maximizing the thermal insulating properties of a gas contained in the space formed by the unit while at the same time providing clear vision through the unit. From a mechanical perspective, insulated glass units incorporating electrochromic glass are similar to IGUs currently known in the art, except for the electrochromic device and associated electrical components, such as terminals for connecting the electrochromic device to a voltage source.

Generally, the substrate and the IGU as a whole, is a rectangular structure. However, in some other implementations other shapes (for example, circular, elliptical, triangular, curvilinear, convex, concave) are possible and may be desired. In some implementations, a length of the substrate can be in the range of approximately 14 inches to approximately 12 feet, a width of each substrate can be in the range of approximately 14 inches to approximately 12 feet, and a thickness of each substrate can be in the range of approximately 1 millimeter to approximately 10 millimeters (although other lengths, widths or thicknesses, both smaller and larger, are possible and may be desirable based on the needs of a particular user, manager, administrator, builder, architect or owner). Additionally, the IGU may include two panes, or in some other implementations, an IGU can include three or more panes. Each pane may be a glass substrate as described above. Furthermore, in some implementations, one or more of the panes can itself be a laminate structure of two, three, or more layers or sub-panes.

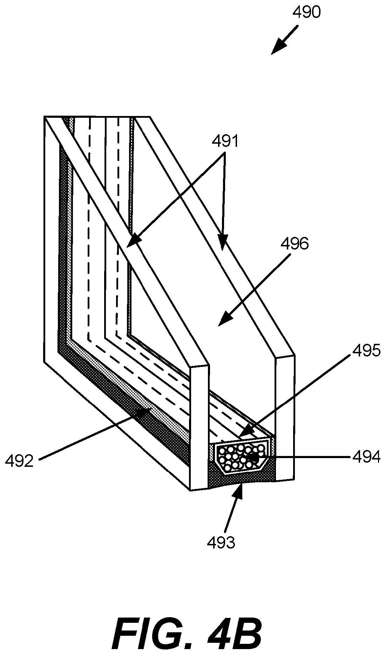

Panes or substrates of an IGU are spaced apart from one another by spacers to form an interior volume. Figure 4B shows an example of an IGU 490 with a spacer 495 between two panes of glass 491 and primary and secondary seals, 492 and 493, respectively. Spacer 495 in this example is a hollow metal structure with a desiccant 494 inside. In some implementations, the interior volume or air space 496 is filled with argon (Ar), although in some other implementations, the interior volume or air space 496 can be filled with another gas, such as another noble gas (for example, krypton (Kr) or xenon (Xe)), another (non-noble) gas, or a mixture of gases (for example, air). Filling the interior volume or air space 496 with a gas such as Ar, Kr, or Xe can reduce conductive heat transfer through the IGU because of the low thermal conductivity of these gases as well as improve acoustic insulation due to their increased atomic weights. In some other implementations, the interior volume or air space 496 can be evacuated of air or other gas. The spacer 495 generally determines the thickness of the interior volume; that is, the spacing between the substrates. In some implementations, the spacing between the substrates is in the range of approximately 0.375" to approximately 4". The width of the spacer 495 can be in the range of approximately 0.25" to approximately 4." Although not shown in the cross-sectional view, the spacer 495 is typically formed around all perimeter edges of the IGU (for example, top, bottom, left and right sides of the IGU). In certain implementations, the spacer 495 is formed of a foam or plastic material. However, in some other implementations, the spacer 495 can be formed of metal or other conductive material, for example, a metal tube structure. A first primary seal 492 adheres and hermetically seals each of the spacer 495 and the second surface of a first pane or lite. A second primary seal 492 adheres and hermetically seals each of the spacer 495 and the first surface of a second pane or lite. In some implementations, each of the primary seals 492 and can be formed of an adhesive sealant such as, for example, PIB (polyisobutylene). The moisture vapor barrier and the seal create a hermetic air space. The material can be thought of as a soft, sticky o-ring around the perimeter of the spacer 495 to create the seal between the spacer 495 and the glass surface. In some implementations, the IGU further includes secondary seal 493 that hermetically seals a border around the entire IGU outside of the spacers 495. The secondary seal 493 is used for structural integrity. It fills in the gap around the entire perimeter of the IGU, typically about 3mm to about 9mm deep from the edge. It has the consistency of tar upon application and then cures and hardens to a rubber-like consistency before shipment. To this end, the spacer 495 can be inset from the edges of the first and the second panes or lites by a distance. In some implementations, the secondary seal 493 can be formed of an adhesive sealant such as, for example, silicone or polysulfide.

### METHOD

Figure 2 shows various operations in which the glass substrate may be subject to scratches, smudging, fingerprints, particles, and contamination. Block 201 depicts operations in which the vendor or fabricator handling the glass substrates may scratch or otherwise mar the substrate surface, or where transfer operations may cause scratches or other defects. Block 203 shows operations in which the substrate may be scratched, contaminated, smudged, or subjected to fingerprints and particles when loaded and unloaded in in-house operations for preparing a substrate for and fabricating an EC device on the glass substrate. There are several operations in which the glass substrate including the first transparent conductor layer may be vulnerable to scratches and damage. Disclosed embodiments involve methods of protecting a glass substrate using a sacrificial coating deposited prior to operations that might introduce defects and removed prior to coating the glass substrate with material to form an electrochromic device. It will be understood that the term "sacrificial coating" or "sacrificial layer" which may be used interchangeably herein may refer to done or more layers of material used to deposit the sacrificial coating or sacrificial layer. Some fabrication methods include depositing the sacrificial coating after fabricating the float glass with a first transparent conductor layer, or after forming a Stoce pack, or after unpacking a Stoce pack, or after a wash operation; e.g., after a first wash and prior to a tempering operation at an EC factory or after a second wash and before a pre-scribe operation at an EC factory. Some fabrication methods include removing the sacrificial coating during a first wash operation, and/or during tempering, and/or during a second wash operation, and/or during a third wash operation after scribing, and/or immediately prior to coating the substrate with EC material.

Depositing and removing sacrificial coatings in accordance with various disclosed embodiments reduce the presence of scratches, smudging, fingerprints, particles, and contamination on a transparent conductor layer, which can be detrimental to fabrication of an EC stack over the transparent conductor layer. Disclosed embodiments are capable of being integrated into existing processing operations for fabricating an EC stack on a glass substrate. For example, various wash operations may include solutions suitable for removing the sacrificial coating such that disclosed embodiments may easily be incorporated into a washing operation in the fabrication process. Disclosed embodiments also may eliminate certain operations, e.g. washing operations in some embodiments. For example, some washing operations may not be necessary since the sacrificial coating can protect the underlying transparent conductor layer from contamination, and thus the efficiency of fabricating EC devices is increased. In addition, disclosed embodiments reduce handling marks and smudges, thereby reducing yield loss.

Table 1 provides various combinations of deposition (shaded) and removal (labeled with a, b, c, d, or e) that may be used in accordance with disclosed embodiments. The operations in Table 1 correspond to the general processing operations described above with respect to Figure 1. As described below, a sacrificial coating may be deposited during any of operations 101, 102, 103, 107, and 109 of Figure 1, and may be removed during any of the letter-labeled operations shown in Table 1.

Scenarios may be referred to by number and letter such that, for example, "1a" involves depositing a sacrificial coating after fabricating the first transparent conductor layer on the glass substrate in operation 101 and removing the sacrificial coating during the first wash in operation 107. In another example, "2c" involves depositing a sacrificial coating after packing the glass sheets in operation 102, and removing the sacrificial coating during a second wash in operation 109. In some embodiments, a combination of one or more scenarios may be used for protecting glass sheets during processing.

**Table 1. Deposition and Removal of Sacrificial Coatings**

| **Operation** | **Step Description** | **Scenario** | | | | | |
|---|---|---|---|---|---|---|---|
| | | **1** | **2** | **3** | **4** | **5** | **6** |
| 101 | TCO-1 fabrication | | | | | | |
| 102 | Handling / Stoce Pack | | | | | | |
| 103 | Transport to EC Factory | | | | | | |
| 104 | Handling / Stoce Unpack | | | | | | |
| 105 | Cut | | | | | | |
| 106 | Grind | | | | | | |
| 107 | First wash | a | a | a | | | |
| 108 | Temper | b | b | b | | | |
| 109 | Second wash | c | c | c | | | |
| 110 | Pre-scribe | | | | | | |
| 111 | Third Wash | d | d | d | d | | d |
| 112 | Coat | e | e | e | e | e | e |
| 113 | IG fabrication | | | | | | |

Deposition of a sacrificial coating during operation 101 may be performed after deposition of the transparent conductor layer on the glass substrate, and prior to scoring and breaking the glass sheet if performed. In some embodiments, the sacrificial coating may be deposited before applying interleaving sheets or powder .

Deposition of a sacrificial coating during operation 102 may be performed prior to applying interleaving sheets or powder, which is used during packing. In some embodiments, using interleaving sheets or powder may not be necessary if a sacrificial coating is deposited over the substrate prior to packing.

Deposition of a sacrificial coating during operation 104 may be performed after the Stoce packs are transferred to gantry racks, e.g. by slings, and prior to loading the glass sheet onto a cutting table for operation 105.

Deposition of a sacrificial coating during operation 107 may be performed after the glass sheet is washed, e.g. with water, and dried and prior to transferring to a cart.

Deposition of a sacrificial coating during operation 109 may be performed between any of the wash operations in a multi-step washing process. For example, where operation 109 includes scrubbing the glass sheet with a pH solution, e.g. a basic solution, drying the glass sheet, transporting the glass sheet to another washer, and washing the glass sheet with deionized water, deposition of the sacrificial coating may be performed after drying the glass sheet before transporting the glass sheet to another washer to protect the glass sheet from scratches, smudging, fingerprints, particles, and contamination during transport.

Removal of the sacrificial coating during operation 107 may be integrated into the process such that the wash solution(s) used in operation 107 also removes the sacrificial coating. Removal of the sacrificial coating during operation 107 may be through the chemical action of the pH solution/detergent solution used in operation 107 or through mechanical scrubbing or through a combination of mechanical and chemical action.

Removal of the sacrificial coating during operation 108 may be integrated into the process such that tempering the glass sheet heats the sacrificial coating to cause an oxidation reaction, ashing operation, or delamination such that the sacrificial coating is removed or peeled from the glass sheet.

Removal of the sacrificial coating during operation 109 may be integrated into the process such that any of the solutions or any combination of the solutions used to wash the glass sheet in operation 109 also removes the sacrificial coating during the washing operations.

Removal of the sacrificial coating during operation 111 may be integrated into the process such that the wash solution(s) used in operation 111 also removes the sacrificial coating.

Removal of the sacrificial coating during operation 112 may be integrated into the process such that the sacrificial coating is heated or exposed to plasma to remove the layer in an apparatus or in the a coating apparatus prior to fabricating the EC stack on the transparent conductor layer.

The sacrificial coating may be an organic, inorganic coating or a combination of organic and inorganic materials. The sacrificial coating may be an acrylic material and/or a ceramic material. In various embodiments, the composition of the sacrificial coating includes an alkali-soluble resin including an acrylic polymer or copolymer. The acrylic polymer or copolymer may include any one or more of the following compounds: 2-propenoic acid, 2-methyl- polymer with ethenylbenzene, ethyl 2-propenoate, methyl 2-methyl-2-propenoate, and 1,2-propanediol mono (2-methyl-2-propenoate). Acrylic polymers or copolymers also include olefin-acrylate copolymer dispersions. Solvents used for depositing and homogenizing the coating composition include glycol ethers, such as diethylene glycol monoethylether. Surfactants may be used for emulsifying an alkali-soluble polymer or copolymer. In some embodiments, a non-acrylic polymer or copolymer dispersion may be used, such as ethylene copolymers. In some embodiments, the sacrificial coating is deposited with a stripper that can convert the coating composition to a semi-solid gel-like material that can be easily removable by water. In some embodiments the sacrificial coating may be an adhesive. In some embodiments the sacrificial coating may be peelable or removable by delamination. In some embodiments, the sacrificial coating may be a combination of an organic material and an inorganic material. For example, such a material may be removed in a washing process and/or a heating process.

In some embodiments the sacrificial coating may be a spray-on organic-based coating, e.g. a vinyl layer. The sacrificial coating may be water-based, organic solvent based or a water-organic solvent based coating. The sacrificial coating may include metallic dopants and/or ligands with metallic elements in some embodiments, such as iron or manganese. The sacrificial coating may be a material that dries quickly and may be removed when exposed to solutions of a certain pH. The sacrificial coating may be a composition that may be removed when heated to a certain temperature, such as a temperature of at least 650°C. The sacrificial coating may be made from a material that does not permanently chemically react with the substrate but may be deposited over a glass substrate including a transparent conductor layer to reduce damage to the transparent conductor layer due to scratches, smudges, fingerprints, particles, or contamination.

The sacrificial coating may be deposited by any suitable deposition process. For example, in some embodiments, the organic coating is deposited using an organic liquid precursor, an aqueous precursor, or a mixed organic-aqueous precursor solution which may be sprayed, dip-coated, or spin-coated onto the surface of the substrate to form a coating over the transparent conductor layer. The material selected for the sacrificial coating depends on the type of removal technique that is to be used in subsequent operations to remove the sacrificial coating and depends on the operations for which the sacrificial coating must withstand to protect the transparent conductor layer. In some embodiments, depositing the sacrificial coating includes applying the layer in a liquid or solid form and curing the layer at an ambient temperature. Curing may include e.g. polymerizing a monomeric precursor, gelling a precursor or otherwise solidifying a solution of a precursor. A cured film bonds with the glass and creates a strong enough top layer that prevents the transparent conductor layer underneath from being scratched. Sacrificial coatings as described herein may, in some embodiments, withstand scrubbing with metal, scrubbing with glass particles, scrubbing with plastic brushes or rubbing a sharp glass piece with high pressure on the surface. Such sacrificial coatings may be suitable for protecting transparent conductor layers where the sacrificial coating is removed in a later fabrication operation, such as just prior to coating the EC stack, since a sacrificial coating that is removed in a later fabrication operation is used to protect the transparent conductor layer even during washing and scrubbing operations after cutting, grinding, tempering, and pre-scribing operations.

The sacrificial coating may be deposited to any suitable thickness, e.g. depending on during which operation the sacrificial coating is deposited and during which operation the sacrificial coating is to be removed. In various embodiments, the sacrificial coating may be deposited to a thickness between about 1 µm and about 3000 µm. In some embodiments the sacrificial coating may be deposited to a thickness between about 1 µm and about 90 µm, or between about 1 µm and about 80 µm, or between about 1 µm and about 70 µm, or between about 1 µm and about 60 µm, or between about 1 µm and about 50 µm, or between about 1 µm and about 40 µm, or between about 1 µm and about 30 µm, or between about 1 µm and about 20 µm, or between about 1 µm and about 10 µm. In certain embodiments, the sacrificial coating may be between about 500 µm and about 3000 µm thick.

In some embodiments, if the sacrificial coating is to be removed during the first wash and the first wash involves using a basic solution, the sacrificial coating may be an organic coating that is removable using the basic solution used during the first wash. A basic solution may have a pH between 8 and 12, or between 8 and 10, or between 8 and 9. In some embodiments, if the sacrificial coating is to be removed during tempering, the sacrificial coating includes a composition that is easily removable at high temperatures using an oxidation reaction, ashing operation, or delamination techniques with or without a subsequent washing step. In some embodiments, if the sacrificial coating is to be removed during a second wash, where the second wash includes a washing solution less harsh than the solution used in the first wash, the composition of the sacrificial coating may be such that it will not be removed when exposed to the harsher solution of the first wash, and will not be removed when subject to high temperatures during tempering, but will be removed when exposed to the second washing solution. It will be understood that the sacrificial coating composition may vary depending on the operations for which the sacrificial coating is not to be removed and the operation at which the sacrificial coating is to be removed and the embodiments provided above are only some possible examples of scenarios in which the sacrificial coating is removed. In one embodiment, a washing step removes part of the sacrificial coating or otherwise prepares the coating for removal in a heating step, e.g. a tempering step.

In some embodiments, the sacrificial coating may be removed using a combination of chemical and mechanical action. For example, in some embodiments, the sacrificial coating may be removed by washing the sacrificial coating with an acidic or basic solution (depending on the sacrificial coating material used) and peeled or scrubbed off the glass substrate. It will be understood that any combination of one or more deposition and removal operations of sacrificial coatings may be used. For example, in some embodiments a first sacrificial coating may be deposited after operation 110 and removed at operation 107 while a second sacrificial coating is deposited after operation 108 and removed before coating the rest of the electrochromic stack.

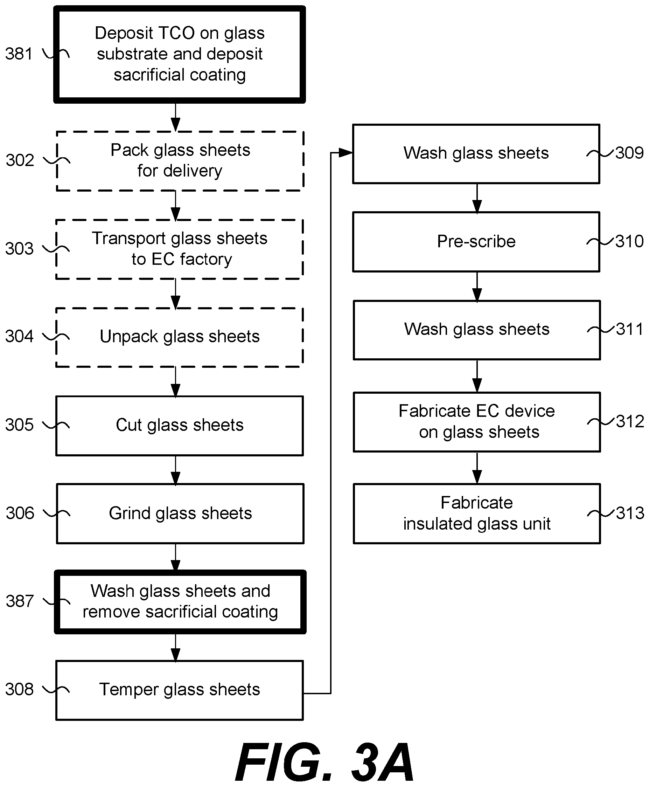

Figure 3A provides an example of a process flow diagram for performing certain disclosed embodiments in accordance with Scenario 1a of Table 1. In this example, the transparent conductor layer is deposited during operation 381 and removed during operation 387.

During operation 381, the transparent conductor layer is deposited on a glass substrate and a sacrificial coating is deposited over the substrate to protect the substrate from scratches in subsequent handling operations in operations 302, 303, 304, 305, and 306.

Removal during a first wash operation in operation 387 may be performed using a wash solution including deionized water, an acid-based solution, a basic solution, and combinations thereof. Subsequently, the glass sheet may then be subject to tempering and other operations in operations 308, 309, 310, 311, 312, and 313 to fabricate the EC device in an IGU.

It will be understood that sacrificial coatings may be removed during any of the wash operations 307, 309, and 311. For example, for Scenarios 1a, 2a, and 3a, the sacrificial coating may be removed during the first wash. For Scenarios 1c, 2c, and 3c, the sacrificial coating may be removed during the second wash. For Scenarios 1d, 2d, 3d, and 4d, the sacrificial coating may be removed during the third wash. Where the sacrificial coating is to be removed at a later wash operation and must necessarily withstand prior wash operations, the wash solutions may be selected such that the sacrificial coating can withstand the earlier wash operations but be removed at the later wash operation. For example, the wash solutions may vary by pH, ionic strength, density, lipophilicity or hydrophilicity, e.g. may include organic solvents or may include or exclude one or more mixture compositions suitable for the specific wash operation. For example, in some embodiments, if a sacrificial coating is removed during the third wash operation of operation 109 of Figure 1, the solution may include chelating agents such as described above. In some embodiments, the third wash operation of operation 109 for removing a sacrificial coating may include a high alkaline solution for removing the sacrificial coating. In certain operations, a wash step may be water-only based and not affect the sacrificial layer or remove the sacrificial layer; in other embodiments, the wash solution includes an organic solvent to aid in removing the sacrificial layer or components thereof. In various embodiments, the sacrificial layer may be aqueous-soluble, organic-soluble, or both. It will be understood that where the sacrificial coating is to be removed at a second or third wash operation, the wash solution in a first wash operation will be gentler on the sacrificial coating than the wash solution in a second or third wash. For example, if the sacrificial layer is organic-soluble, the first wash may use a first solution that is aqueous-based and may not remove the sacrificial coating or may otherwise be gentler on the sacrificial coating, while in a second wash step, an aqueous solution that includes a higher concentration of organic solvent than the first solution may be used to remove the sacrificial layer. In some embodiments, the opposite may be true, for example, where the sacrificial layer is water-soluble, the first wash solution may be organic-based, and subsequent wash solutions may be water-based. Likewise, where the sacrificial coating is to be removed at a third wash operation, the wash solution in a first or second wash operation will be gentler on the sacrificial coating than the wash solution in the third wash. It will further be understood that in some embodiments, where the sacrificial coating is not removed in a later operation, wash operations prior to the operation in which the sacrificial coating is removed may not necessarily need to be performed. For example, in some embodiments, the sacrificial coating may not be removed until operation 112 of Figure 1, such that the sacrificial coating is removed just before the EC stack is fabricated on the substrate. Accordingly, some wash operations such as any of operations 107, 109, and 111 may not be necessary, particularly if the purpose of the washing operations were previously used to prevent scratches or contamination on the transparent conductor layer, because the sacrificial coating would provide sufficient protection on the transparent conductor layer to protect the transparent conductor layer from contamination that may occur during various processing operations.

The sacrificial coating may be a peelable coating, such as those commercially available from Saint-Gobain Glass, or from PPG Industries. For example, in some embodiments, a peelable sacrificial coating may be formed from a liquid composition including 5-40% soluble copolyamide, 55-85% ethanol, and 0-20% water. In some embodiments, a peelable sacrificial coating may be an aqueous-based vinyl material that may be removed by washing or peeling. In one embodiment, a sacrificial coating is peeled off and is included in a process that has a subsequent washing step before further processing is performed. In another embodiment, a sacrificial coating is peeled off without a subsequent washing step prior to further processing.

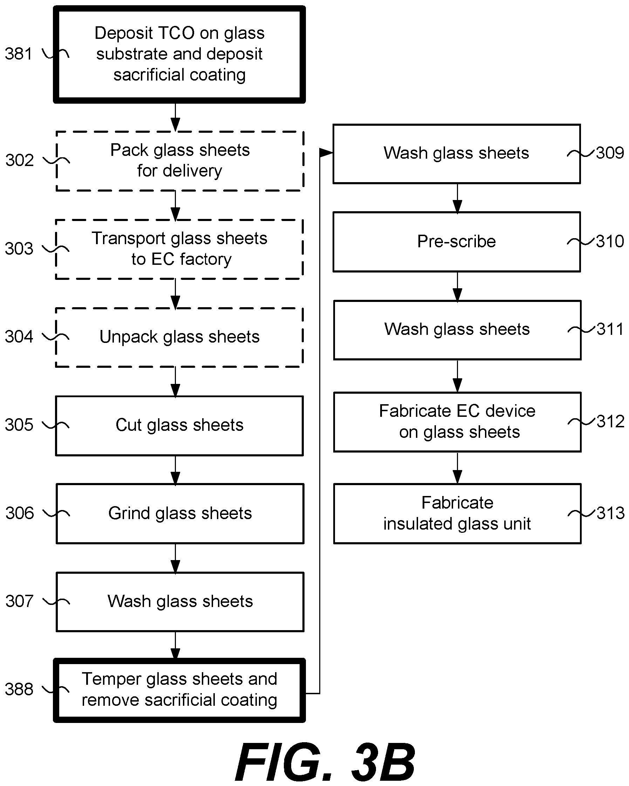

Figure 3B provides another example of a process flow diagram for performing certain disclosed embodiments. Figure 3B provides an example corresponding to Scenario 1b of Table 1. In this example, the transparent conductor layer is deposited during operation 381 and removed during operation 387. During operation 381, the sacrificial coating is deposited over the deposited transparent conductor layer on a glass substrate. The sacrificial coating protects the transparent conductor layer from contamination and scratches in operations 302, 303, 304, 305, 306, and 307. The sacrificial coating is also capable of withstanding these operations such that the glass sheet with the sacrificial coating may be cut and ground while still protecting the underlying transparent conductor layer. Similarly, the sacrificial coating is also capable of withstanding the first wash operation in operation 307. In this example, during operation 388, the glass sheets are tempered and the sacrificial coating may be removed at tempering temperatures using an oxidation reaction, ashing technique, or delamination technique. A high tempering temperature may be between about 600°C and about 700°C, or between about 500°C and about 650°C. It will be understood that any of the Scenarios 1b, 2b, and 3b may allow the sacrificial coating deposited during 101, 102, and 104 of Figure 1 respectively to be removed during the tempering operation.

Subsequently, the glass sheet is subject to further processing in operations 309, 310, 311, 312, and 313, the operations of which are described above with respect to Figure 1.

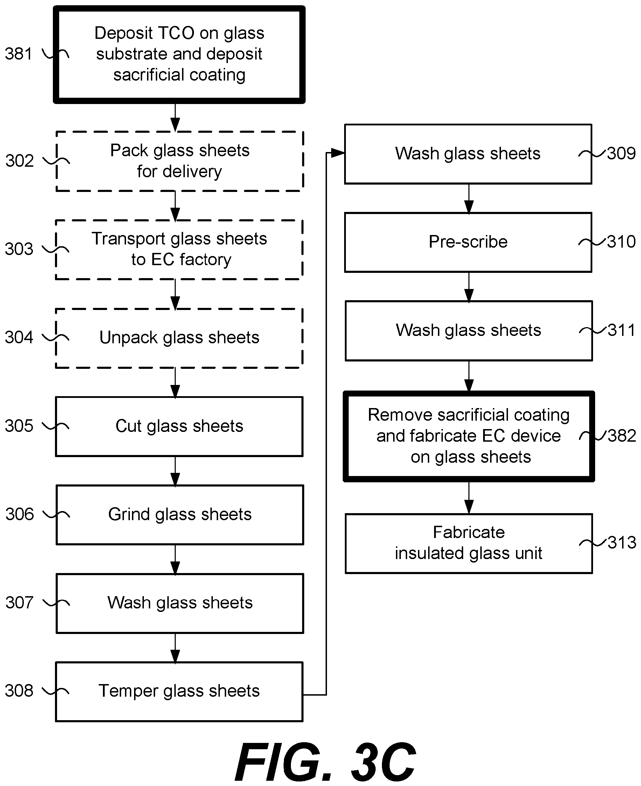

Figure 3C provides an example of a process flow diagram for performing certain disclosed embodiments in accordance with Scenario 1e of Table 1. In this example, the transparent conductor layer is deposited during operation 381 and removed during operation 382. In operation 382, after the glass sheet with sacrificial coating is washed in operation 311, the sacrificial coating may be removed in a separate apparatus or in the coating apparatus ("coater") in which an EC stack may be fabricated on the glass sheet. The sacrificial coating is removed prior to fabricating the EC stack on the glass sheet. Removal of the sacrificial coating in the coater may be performed by heating the glass sheet to cause an oxidation reaction, ashing, and/or delamination to occur, thereby removing the sacrificial coating from the transparent conductor layer on the glass sheet. In one embodiment, a plasma is used to remove the sacrificial coating by etching. The sacrificial layer removal station or module may be followed by a buffer station where the glass cools before entering the EC stack fabrication apparatus, for example stations or modules. In certain embodiments the thermal resistance of the sacrificial coating is degraded in the wash steps after tempering (e.g. step 111) such that the sacrificial layer is able to withstand the high temperatures prior to this step (e.g. during the Tempering operation in Step 108) but not subsequent to this wash step (e.g. during the Coat operation in Step 112). In certain embodiments, the sacrificial coating is removed in a station at or near the entry into a controlled environment portion of the coater, i.e., before the sputter deposition stations but nevertheless exposed to the vacuum or low pressure environment of the sputter stations. Further description of a coater suitable for use alone or with an integrated station for removing a sacrificial coating as described herein and for fabricating an EC stack is provided in U.S. Patent No. 9,007,674, issued on April 14, 2015 and filed on February 8, 2013, entitled "DEFECT-MITIGATION LAYERS IN ELECTROCHROMIC DEVICES," and PCT Application No. PCT/US15/00411 filed on December 24, 2015 and titled "THIN-FILM DEVICES AND FABRICATION," which are herein incorporated by reference in their entireties.

In some embodiments, removal of the sacrificial coating in operation 382 in the coater may be performed by exposing the sacrificial coating to a plasma. The plasma may be ignited at a low pressure such as between about 0.1 mTorr and about 1 Atmosphere. In some embodiments, the plasma may be ignited at a low pressure such as between about 1 mTorr and about 100 Torr. In some embodiments, the plasma is ignited in the presence of one or more gases such as O₂, N₂, H₂, He, Ar, and H₂O. In certain embodiments the gas used in a molecule that dissociate to release a halogen species (e.g. CF₄, HCl, SiCl₄, etc.) or N₂. In various embodiments, atmospheric plasma may be used to remove the sacrificial coating. The sacrificial coating may be removed in a station at or near the entry into a controlled environment portion of the apparatus, such as before the sputter deposition stations. The sacrificial coating may be removed in an environment in a vacuum or in a low pressure environment provided in the sputter stations but prior to inserting the glass substrate into a sputter deposition station.

It will be understood that Figures 3A-3C provide only some of many examples for performing certain disclosed embodiments. Removal of the sacrificial coating may be performed at any of the above identified scenarios of Table 1. In addition, atmospheric plasma may be used to clean the sacrificial coating during any of the processing operations in Figure 1. Atmospheric plasma may also be used to aid cleaning during any of the wash operations described above with respect to operations 107, 109, and 111 of Figure 1. In some embodiments, the sacrificial coating may be deposited over a glass substrate having a fabricated EC device to protect the coating during shipment, such as to a downstream facility an extended distance from the facility in which the EC device is fabricated. For example, in some embodiments, the EC device may be coated on a substrate prior to shipping and cutting the substrate into daughter devices or lites. This may allow more flexibility in handling, providing more time to inspect, pack, store, and ship the product. The sacrificial coating may then be removed in a separate, post-processing facility.

A number of examples of depositing and removing sacrificial coating are presented below. Each is a variation on the fabrication operations described above with respect to Figure 1, and deposition and removal operations described above with respect to Table 1.
**Option 1a** (example described above with respect to Figure 3A)
   Deposit transparent conductor layer then sacrificial coating on glass substrate
   Package substrates for shipping
   Transport substrates to EC factory
   Unpack substrates
   Cut substrate
   Grind substrate
   Wash substrate with solution that removes sacrificial coating
   Temper substrate
   Wash substrate
   Pre-scribe substrate (optional)
   Wash substrate
   Coat substrate with EC stack
   Fabricate IGU
**Option 1b** (example described above with respect to Figure 3B)
   Deposit transparent conductor layer then sacrificial coating on glass substrate
   Package substrates for shipping
   Transport substrates to EC factory
   Unpack substrates
   Cut substrate
   Grind substrate
   Wash substrate
   Temper substrate and remove sacrificial coating
   Wash substrate
   Pre-scribe substrate (optional)
   Wash substrate
   Coat substrate with EC stack
   Fabricate IGU
**Option 1c**
   Deposit transparent conductor layer then sacrificial coating on glass substrate
   Package substrates for shipping
   Transport substrates to EC factory
   Unpack substrates
   Cut substrate
   Grind substrate
   Wash substrate (optional)
   Temper substrate
   Wash substrate with solution that removes sacrificial coating
   Pre-scribe substrate (optional)
   Wash substrate
   Coat substrate with EC stack
   Fabricate IGU
**Option 1d**
   Deposit transparent conductor layer then sacrificial coating on glass substrate
   Package substrates for shipping
   Transport substrates to EC factory
   Unpack substrates
   Cut substrate
   Grind substrate
   Wash substrate (optional)
   Temper substrate
   Wash substrate (optional)
   Pre-scribe substrate (optional)
   Wash substrate with solution that removes sacrificial coating
   Coat substrate with EC stack
   Fabricate IGU
**Option 1e** (example described above with respect to Figure 3C)
   Deposit transparent conductor layer then sacrificial coating on glass substrate
   Package substrates for shipping
   Transport substrates to EC factory
   Unpack substrates
   Cut substrate
   Grind substrate
   Wash substrate (optional)
   Temper substrate
   Wash substrate (optional)
   Pre-scribe substrate (optional)
   Wash substrate (optional)
   Remove sacrificial coating by heating or plasma treatment
   Coat substrate with EC stack
   Fabricate IGU
   Wash substrate (optional)
**Option 2a**
   Deposit transparent conductor layer on glass substrate
   Deposit sacrificial coating over glass substrate before packaging
   Package substrates for shipping
   Transport substrates to EC factory
   Unpack substrates
   Cut substrate
   Grind substrate
   Wash substrate with solution that removes sacrificial coating
   Temper substrate
   Wash substrate
   Pre-scribe substrate (optional)
   Wash substrate
   Coat substrate with EC stack
   Fabricate IGU
**Option 2b**
   Deposit transparent conductor layer on glass substrate
   Deposit sacrificial coating over glass substrate before packaging
   Package substrates for shipping
   Transport substrates to EC factory
   Unpack substrates
   Cut substrate
   Grind substrate
   Wash substrate
   Temper substrate and remove sacrificial coating
   Wash substrate
   Pre-scribe substrate (optional)
   Wash substrate
   Coat substrate with EC stack
   Fabricate IGU
**Option 2c**
   Deposit transparent conductor layer on glass substrate
   Deposit sacrificial coating over glass substrate before packaging
   Package substrates for shipping
   Transport substrates to EC factory
   Unpack substrates
   Cut substrate
   Grind substrate
   Wash substrate (optional)
   Temper substrate
   Wash substrate with solution that removes sacrificial coating
   Pre-scribe substrate (optional)
   Wash substrate
   Coat substrate with EC stack
   Fabricate IGU
**Option 2d**
   Deposit transparent conductor layer on glass substrate
   Deposit sacrificial coating over glass substrate before packaging
   Package substrates for shipping
   Transport substrates to EC factory
   Unpack substrates
   Cut substrate
   Grind substrate
   Wash substrate (optional)
   Temper substrate
   Wash substrate (optional)
   Pre-scribe substrate (optional)
   Wash substrate with solution that removes sacrificial coating
   Coat substrate with EC stack
   Fabricate IGU
**Option 2e**
   Deposit transparent conductor layer on glass substrate
   Deposit sacrificial coating over glass substrate before packaging
   Package substrates for shipping
   Transport substrates to EC factory
   Unpack substrates
   Cut substrate
   Grind substrate
   Wash substrate (optional)
   Temper substrate
   Wash substrate (optional)
   Pre-scribe substrate (optional)
   Wash substrate (optional)
   Remove sacrificial coating by heating or plasma treatment
   Coat substrate with EC stack
   Fabricate IGU
   Wash substrate (optional)
**Option 3a**
   Deposit transparent conductor layer on glass substrate
   Package substrates for shipping
   Transport substrates to EC factory
   Unpack substrates
   Deposit sacrificial coating over glass substrate
   Cut substrate
   Grind substrate
   Wash substrate with solution that removes sacrificial coating
   Temper substrate
   Wash substrate
   Pre-scribe substrate (optional)
   Wash substrate
   Coat substrate with EC stack
   Fabricate IGU
**Option 3b**
   Deposit transparent conductor layer on glass substrate
   Package substrates for shipping
   Transport substrates to EC factory
   Unpack substrates
   Deposit sacrificial coating over glass substrate
   Cut substrate
   Grind substrate
   Wash substrate
   Temper substrate and remove sacrificial coating
   Wash substrate
   Pre-scribe substrate (optional)
   Wash substrate
   Coat substrate with EC stack
   Fabricate IGU
**Option 3c**
   Deposit transparent conductor layer on glass substrate
   Package substrates for shipping
   Transport substrates to EC factory
   Unpack substrates
   Deposit sacrificial coating over glass substrate
   Cut substrate
   Grind substrate
   Wash substrate (optional)
   Temper substrate
   Wash substrate with solution that removes sacrificial coating
   Pre-scribe substrate (optional)
   Wash substrate
   Coat substrate with EC stack
   Fabricate IGU
**Option 3d**
   Deposit transparent conductor layer on glass substrate
   Package substrates for shipping
   Transport substrates to EC factory
   Unpack substrates
   Deposit sacrificial coating over glass substrate
   Cut substrate
   Grind substrate
   Wash substrate (optional)
   Temper substrate
   Wash substrate (optional)
   Pre-scribe substrate (optional)
   Wash substrate with solution that removes sacrificial coating
   Coat substrate with EC stack
   Fabricate IGU
**Option 3e**
   Deposit transparent conductor layer on glass substrate
   Package substrates for shipping
   Transport substrates to EC factory
   Unpack substrates
   Deposit sacrificial coating over glass substrate
   Cut substrate
   Grind substrate
   Wash substrate (optional)
   Temper substrate
   Wash substrate (optional)
   Pre-scribe substrate (optional)
   Wash substrate (optional)
   Remove sacrificial coating by heating or plasma treatment
   Coat substrate with EC stack
   Fabricate IGU
   Wash substrate (optional)
**Option 4d**
   Deposit transparent conductor layer on glass substrate
   Package substrates for shipping
   Transport substrates to EC factory
   Unpack substrates
   Cut substrate
   Grind substrate
   Wash substrate
   Deposit sacrificial coating over glass substrate
   Temper substrate
   Wash substrate (optional)
   Pre-scribe substrate (optional)
   Wash substrate with solution that removes sacrificial coating
   Coat substrate with EC stack
   Fabricate IGU
**Option 4e**
   Deposit transparent conductor layer on glass substrate
   Package substrates for shipping
   Transport substrates to EC factory
   Unpack substrates
   Cut substrate
   Grind substrate
   Wash substrate
   Deposit sacrificial coating over glass substrate
   Temper substrate
   Wash substrate (optional)
   Pre-scribe substrate (optional)
   Wash substrate (optional)
   Remove sacrificial coating by heating or plasma treatment
   Coat substrate with EC stack
   Fabricate IGU
   Wash substrate (optional)
**Option 5e**
   Deposit transparent conductor layer on glass substrate
   Package substrates for shipping
   Transport substrates to EC factory
   Unpack substrates
   Cut substrate
   Grind substrate
   Wash substrate
   Temper substrate
   Wash substrate
   Deposit sacrificial coating over glass substrate
   Pre-scribe substrate (optional)
   Wash substrate (optional)
   Remove sacrificial coating by heating or plasma treatment
   Coat substrate with EC stack
   Fabricate IGU
   Wash substrate (optional)
**Option 6d**
   Deposit transparent conductor layer on glass substrate
   Package substrates for shipping
   Transport substrates to EC factory
   Unpack substrates
   Cut substrate
   Grind substrate
   Wash substrate
   Temper substrate
   Deposit sacrificial coating over glass substrate
   Wash substrate (optional)
   Pre-scribe substrate (optional)
   Wash substrate with solution that removes sacrificial coating
   Coat substrate with EC stack
   Fabricate IGU
**Option 6e**
   Deposit transparent conductor layer on glass substrate
   Package substrates for shipping
   Transport substrates to EC factory
   Unpack substrates
   Cut substrate
   Grind substrate
   Wash substrate
   Temper substrate
   Deposit sacrificial coating over glass substrate
   Wash substrate (optional)
   Pre-scribe substrate (optional)
   Wash substrate (optional)
   Remove sacrificial coating by heating or plasma treatment
   Coat substrate with EC stack
   Fabricate IGU
   Wash substrate (optional)

### EXPERIMENTAL

The below experiments were conducted using five different compositions of sacrificial coatings, which are labeled A, B, C, D, and E. These sacrificial coatings were organic-based coatings deposited as a liquid or solid onto a glass substrate including a first transparent conductor layer. The coatings were subject to various conditions as described below.

### EXPERIMENT 1: CURE TIME

An experiment was conducted for the five sacrificial coatings. In the first trial, each glass was preheated to a temperature of 35°C prior to depositing the coating. In the second trial, each glass was preheated to a temperature of 45°C prior to depositing the coating. In the third trial, each glass was preheated to a temperature of 55°C prior to depositing the coating.

Each coating in each trial was scratched with a glass edge at various intervals after deposition of the coating: 2 minutes after deposition, 10 minutes after deposition, 30 minutes after deposition, and 60 minutes after deposition. The coatings were observed and evaluated after each of these intervals and checked to see which cure times and temperatures were viable.

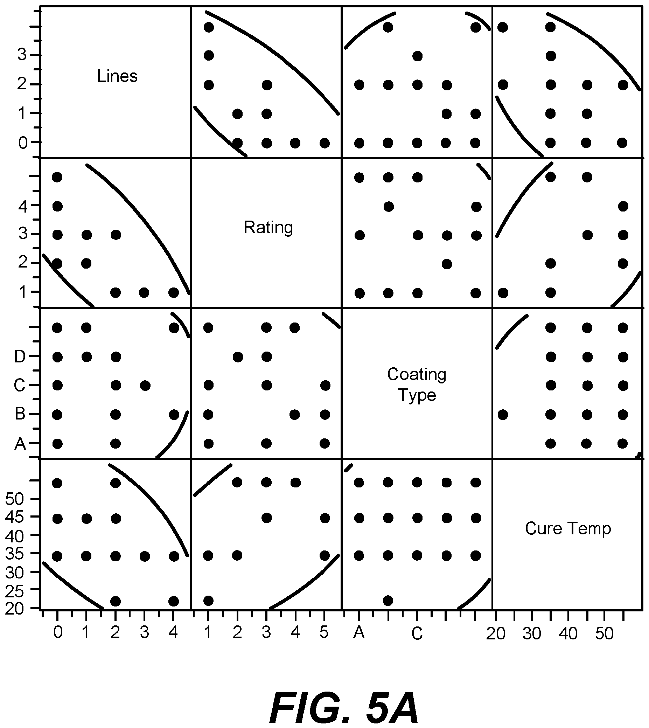

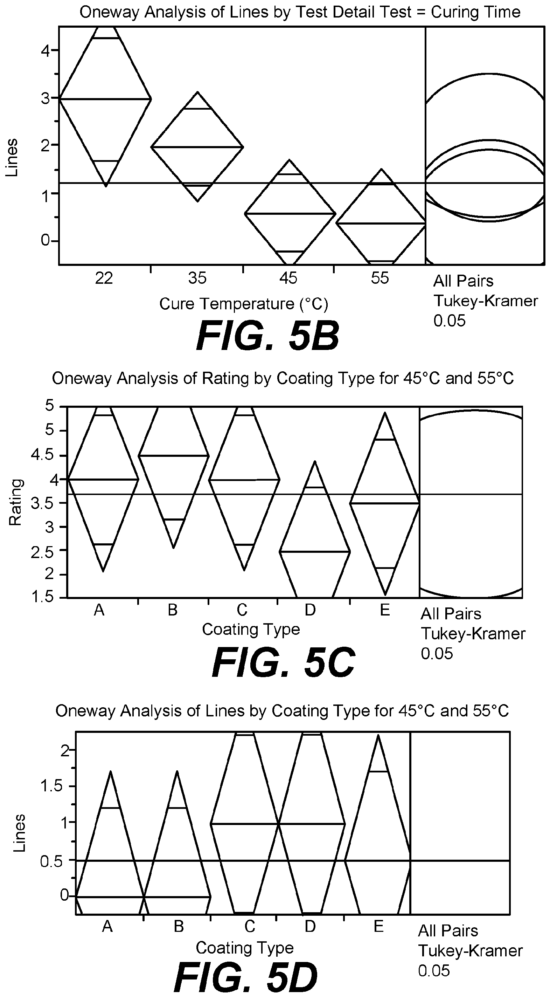

The results are shown in Figures 5A-5D. Figure 5A is a scatterplot of the various trends for number of lines seen, ratings, coating types, and cure temperatures. Ratings shown in were evaluated by observation where 1 is a rating for a glass having many observable imperfections and 5 is a rating for a glass with no imperfections. Any imperfection would be rated at least a 4. Lines depict the number of scratch lines that were seen. Figure 5B shows the various cure temperatures and the number of lines seen. Figure 5C shows the ratings for each of the five coatings. Figure 5D shows the number of lines seen for each of the five coatings.

For coatings deposited at higher temperatures, the coatings cured faster and were more resistant to scratches.

### EXPERIMENT 2: CUTTING

An experiment was conducted for substrates with a sacrificial coating. Coating C was applied on three 14x20 glass substrates, each with a first transparent conductor layer. The substrates were placed into an oven for 2 hours at 50°C. The substrates were hand-scored with a cutting wheel on the side of the glass with the sacrificial coating, and the glass was broken apart.

The substrates with sacrificial coatings scored easily and broke when hand-scored. These results suggest that coatings may withstand cutting operations in a fabrication process and may thus be removed from a glass substrate at operations performed after cutting.

### EXPERIMENT 3: WASHING

An experiment was conducted for substrates having each of the five sacrificial coatings. In a first trial, the substrates were hand-washed twice using deionized water or tap water such and then that the substrate with the sacrificial coating was scratched with a glass edge. The sacrificial coating was removed and the EC stack was deposited subsequently.

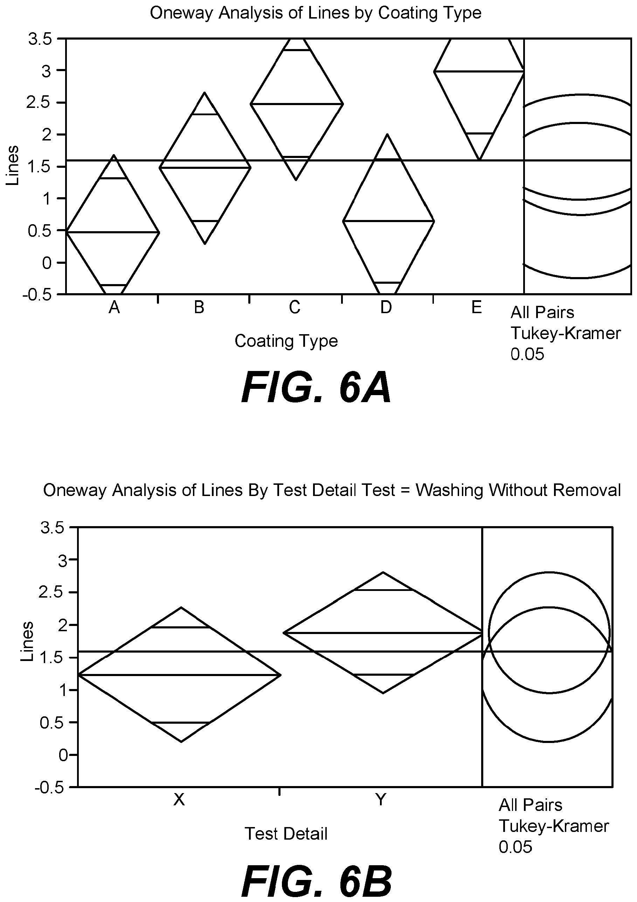

The results indicated that the coating was able to withstand exposure to both deionized water (Y in Figure 6B) and tap water (X in Figure 6B). The observed numbers of lines are depicted in Figures 6A and 6B.

### EXPERIMENT 4: TEMPERING SIMULATION

An experiment was conducted for glass substrates having each of A, B, and D coatings. The coatings were applied after the substrates were ground, and then the coatings were scratched with a glass edge. The substrates were washed in a Forel glass washer, then scratched again. The substrates were heated at a temperature of 650°C and quenched to simulate tempering, then the coatings were scratched again for reference. The lines of scratches were observed.

Scratches that were on the coating after the simulated tempering operation were visible. The scratches on a control sample were also visible. The scratches that were made before washing through the Forel glass washer and the scratches that were made after washing but before tempering were not apparent. These results suggested that the sacrificial coating is removable by tempering but can withstand scratching, tempering, and washing in the Forel glass washer.

### CONCLUSION

Although the foregoing embodiments have been described in some detail for purposes of clarity of understanding, it will be apparent that certain changes and modifications may be practiced within the scope of the appended claims. It should be noted that there are many alternative ways of implementing the processes, systems, and apparatus of the present embodiments. Accordingly, the present embodiments are to be considered as illustrative and not restrictive, and the embodiments are not to be limited to the details given herein.

For the avoidance of doubt, the application extends to the subject-matter set out in the following numbered paragraphs ("Para" or "Paras"):
1. A method of manufacturing an electrochromic device comprising an electrochromic stack between a first and a second transparent electronically conductive layer configured to deliver an electrical potential difference over surfaces of the electrochromic stack and thereby cause optical switching of the electrochromic device, the method of manufacturing comprising:
   depositing a sacrificial coating over a substrate, the substrate comprising the first transparent electronically conductive layer; and
   prior to coating a glass substrate with the second transparent electronically conductive layer of the electrochromic stack, removing the sacrificial coating.
2. The method of Para 1, wherein removing the sacrificial coating comprises heating the sacrificial coating to temperature between about 200°C and about 700°C.
3. The method of Para 2, wherein removing the sacrificial coating comprises heating the sacrificial coating to temperature between about 500°C and about 650°C.
4. The method of Para 1, wherein removing the sacrificial coating comprises a wash operation conducted prior to coating the substrate with the second transparent electronically conductive layer.
5. The method of Para 1, wherein removing the sacrificial coating comprises exposing the sacrificial coating to an acidic solution.
6. The method of Para 1, wherein removing the sacrificial coating comprises exposing the sacrificial coating to a basic solution.
7. The method of Para 5 or 6, wherein removing the sacrificial coating further comprises mechanically removing the sacrificial coating.
8. The method of any of Para 1, wherein removing the sacrificial coating comprises mechanically removing the sacrificial coating.
9. The method of Para 6, wherein the basic solution has a pH between 8 and 12.
10. The method of Para 1, wherein removing the sacrificial coating is performed in a coater prior to depositing the electrochromic stack on the substrate.
11. The method of Para 10, wherein removing the sacrificial coating comprises exposing the sacrificial coating to a plasma etching process.
12. The method of Para 10, wherein removing the sacrificial coating comprises heating the substrate to a temperature between about 200°C and about 700°C.
13. The method of Para 12, wherein removing the sacrificial coating comprises heating the substrate to a temperature between about 500°C and about 650°C.
14. The method of Para 1, wherein removing the sacrificial coating comprises peeling the sacrificial coating from the substrate.
15. The method of Para 1, wherein removing the sacrificial coating comprises heating the substrate to a temperature between about 200°C and about 700°C and performing a wash operation.
16. The method of any of Paras 1-6, or 8-15, wherein depositing the sacrificial coating is performed in a first facility and removing the sacrificial coating is performed in a second facility.
17. The method of any of Paras 1-6, or 8-15, wherein the sacrificial coating comprises an organic or inorganic coating selected from the group consisting of acrylic materials, ceramic materials, adhesive materials, and vinyl material.
18. The method of any of Paras 1-6, or 8-15, wherein the sacrificial coating is doped with a metal element selected from the group consisting of iron and manganese.
19. The method of any of Paras 1-6, or 8-15, wherein depositing the sacrificial coating deposits the sacrificial coating to a thickness between about 1 µm and about 90 µm.
20. The method of any of Paras 1-6, or 8-15, further comprising depositing the first transparent electronically conductive layer before depositing the sacrificial coating.
21. The method of any of Paras 1-6, or 8-15, wherein further comprising packing the substrate into a stack with interleaving material after depositing the sacrificial coating.
22. The method of any of Paras 1-6, or 8-15, further comprising packing the substrate comprising the sacrificial coating into a stack without using interleaving material.
23. The method of any of Paras 1-6, or 8-15, further comprising, before depositing the sacrificial coating, unpacking the substrate from a stack of substrates comprising interleaving material, wherein the substrate comprises glass material.
24. The method of any of Paras 1-6, or 8-15, further comprising cutting the substrate after depositing the sacrificial coating.
25. The method of any of Paras 1-6, or 8-15, further comprising cutting, grinding, and washing the substrate before depositing the sacrificial coating.
26. The method of any of Paras 1, 4-6, or 8-14, further comprising tempering the substrate before depositing the sacrificial coating.
27. The method of Para 26, further comprising washing the substrate after tempering and before depositing the sacrificial coating.
28. The method of Para 4, further comprising, prior to removing the sacrificial coating, exposing the substrate comprising the sacrificial coating to a second wash operation without removing the sacrificial coating.
29. The method of Para 28, wherein a first solution used for the wash operation for removing the sacrificial coating has a different composition than a second solution used for the second wash operation such that the sacrificial coating is not removed when exposed to the second solution but is removed when exposed to the first solution.
30. The method of Para 28, wherein a first solution used for the wash operation for removing the sacrificial coating has a different pH than a second solution used for the second wash operation such that the sacrificial coating is not removed when exposed to the second solution but is removed when exposed to the first solution.
31. The method of any of Paras 1-6 or 8-15, further comprising depositing a second sacrificial coating and removing the second sacrificial coating, wherein the second sacrificial coating is deposited after removing the first sacrificial coating.
32. The method of Para 31, wherein removing the second sacrificial coating comprises a second wash operation.
33. The method of Para 31, wherein removing the second sacrificial coating exposing the sacrificial coating to a second acidic solution
34. The method of Para 31, wherein removing the second sacrificial coating comprises exposing the sacrificial coating to a second basic solution.
35. The method of Para 34, wherein the basic solution has a pH between 8 and 12.
36. The method of Para 31, wherein removing the second sacrificial coating comprises mechanically removing the sacrificial coating.
37. The method of Para 31, wherein removing the second sacrificial coating is performed in a coater prior to depositing the electrochromic stack on the substrate.
38. The method of Para 37, wherein removing the second sacrificial coating comprises exposing the sacrificial coating to a plasma etching process.
39. The method of Para 37, wherein removing the second sacrificial coating comprises heating the substrate to a temperature between about 200°C and about 700°C.
40. The method of Para 39, wherein removing the second sacrificial coating comprises heating the substrate to a temperature between about 500°C and about 650°C.
41. The method of Para 31, wherein removing the second sacrificial coating comprises peeling the second sacrificial coating from the substrate.
42. The method of Para 1, wherein removing the second sacrificial coating comprises heating the substrate to a temperature between about 200°C and about 700°C and performing a wash operation.
43. A glass substrate for fabricating an electrochromic device, the glass substrate comprising a transparent electronically conductive layer and a sacrificial coating for protecting the transparent electronically conductive layer, the sacrificial coating comprising an organic or inorganic coating selected from the group consisting of acrylic materials, ceramic materials, adhesive materials, and vinyl material.

## Claims

1. A method of processing glass substrates for an electrochromic device comprising an electrochromic stack between a first and a second transparent electronically conductive layer configured to deliver an electrical potential difference over surfaces of the electrochromic stack and thereby cause optical switching of the electrochromic device, the method comprising:
depositing an organic sacrificial coating over a substrate, the substrate comprising the first transparent electronically conductive layer; and
prior to fabricating an insulated glass unit comprising the electrochromic device, removing the organic sacrificial coating.

2. The method of claim 1, further comprising coating the electrochromic device onto the substrate, wherein the organic sacrificial coating is removed after coating the electrochromic device onto the substrate.

3. The method of claim 1, wherein the organic sacrificial coating is deposited over the electrochromic device.

4. The method of claim 1, wherein the organic sacrificial coating is deposited in a first facility and the organic sacrificial coating is removed in a second facility.

5. The method of claim 1, wherein the organic sacrificial coating is removed prior to fabricating the electrochromic stack.

6. The method of claim 1, wherein removing the organic sacrificial coating comprises heating the substrate comprising the organic sacrificial coating, optionally wherein (a) the substrate comprising the organic sacrificial coating is heated to a temperature between about 200°C and about 700°C or (b) the substrate is glass that is tempered during the heating.

7. The method of claim 1, wherein the organic sacrificial coating has a thickness between about 1 µm and about 30 µm, for example, wherein the organic sacrificial coating has a thickness between about 1 µm and about 20 µm.

8. The method of claim 1, wherein removing the organic sacrificial coating is performed in a coater, in which the electrochromic stack is fabricated on the substrate, prior to depositing the electrochromic stack on the substrate, optionally wherein removing the organic sacrificial coating comprises exposing the organic sacrificial coating to a plasma etching process or heating the substrate.

9. The method of claim 1, wherein removing the organic sacrificial coating further comprises performing a wash operation.

10. The method of claim 1, wherein the organic sacrificial coating comprises a material selected from the group consisting of acrylic materials, adhesive materials, and vinyl material.

11. The method of claim 1, further comprising depositing the first transparent electronically conductive layer before depositing the organic sacrificial coating.

12. The method of claim 1, further comprising packing the substrate into a stack with interleaving material after depositing the organic sacrificial coating.

13. The method of claim 1, further comprising packing the substrate comprising the organic sacrificial coating into a stack without using interleaving material.

14. The method of claim 1, further comprising tempering the substrate before depositing the organic sacrificial coating, and optionally washing the substrate after tempering and before depositing the organic sacrificial coating.

15. A glass substrate for fabricating an electrochromic device, the glass substrate comprising a transparent electronically conductive layer and a sacrificial coating for protecting the transparent electronically conductive layer, the sacrificial coating comprising an organic coating selected from the group consisting of acrylic materials, adhesive materials, and vinyl material.
